# EUROPÄISCHE PATENTSCHRIFT

(11) **EP 3 421 269 B1**
(45) Veröffentlichungstag und Bekanntmachung des Hinweises auf die Patenterteilung: **22.07.2020**
(21) Anmeldenummer: 18168644.5
(22) Anmeldetag: 23.04.2018
(51) Int. Cl.: B60C 19/00

(54) **FAHRZEUGLUFTREIFEN AUFWEISEND EIN AKUSTIKELEMENT**
PNEUMATIC VEHICLE TYRE COMPRISING A SOUND DAMPENING ELEMENT
PNEUMATIQUE DE VÉHICULE COMPORTANT UN ÉLÉMENT ACOUSTIQUE

(30) Priorität: 28.06.2017 DE 102017210912
(43) Veröffentlichungstag der Anmeldung: 02.01.2019
(73) Patentinhaber: Continental Reifen Deutschland GmbH, 30165 Hannover (DE)
(72) Erfinder: Zebian, Makram, 30175 Hannover (DE); Schürmann, Oliver, 30855 Langenhagen (DE)
(74) Vertreter: Finger, Karsten

(56) Entgegenhaltungen:
- EP-A2- 0 965 977
- EP-A2- 0 989 000
- DE-A1- 19 619 859
- JP-A- 2003 048 407
- JP-A- 2008 080 969

## Beschreibung

Die Erfindung betrifft einen Fahrzeugluftreifen aufweisend ein Akustikelement, wobei das Akustikelement an einer einem Laufstreifen gegenüberliegenden inneren Reifenoberfläche in einem Reifeninnenraum angeordnet ist

Bei einem auf einer Fahrbahn abrollenden Fahrzeugluftreifen, welcher luftdicht auf einer Felge montiert ist, entstehen Geräusche durch Vibrationen der Luft im von dem Reifen und der Felge eingeschlossenen Radinnenraum. Hierbei bilden sich von der Geometrie des Reifens beeinflusste Resonanzen, d.h. Frequenzen, bei welchen der Schalldruckpegel besonders hoch ist, aus. Bei Reifen für Personenkraftwagen liegen übliche Resonanzfrequenzen bei 200 Hz bis 250 Hz. Die Geräusche werden sowohl in den Fahrgastraum als auch an die Umgebung außerhalb des Fahrzeuges übertragen.

Gemäß des eingangs geschilderten Gegenstands ist es aus der DE 10 2007 028932 A1 zur Reduzierung solcher Geräusche bekannt, einen Schaumstoffring als Akustikelement bzw. als Dämpfungselement an der Innenseite des Fahrzeugluftreifens anzubringen. Dieses Dämpfungselement reduziert die Luftvibrationen im Radinnenraum, was das Geräuschverhalten des Fahrzeuges verbessert. Die Frequenzverteilung der Absorption eines solchen Schaumstoffkörpers ist materialabhängig und damit nicht gut einstellbar. Typischerweise absorbiert ein solcher Schaumstoffring breitbandig, wobei die Absorption mit höheren Frequenzen ansteigt. Typische Resonanzfrequenzen von Reifen liegen dabei unterhalb des Frequenzbereichs optimaler Absorption. Die Absorptionseigenschaften eines solchen Schaumstoffrings sind somit nicht optimal. Gleichzeitig ist der Einsatz von Material für solche Dämpfungselemente mit hohen Kosten verbunden.

Einen entsprechenden Effekt erzielt der Einsatz eines an der Felge angebrachten Schaumstoffrings als Dämpfungselement, wie beispielsweise aus der DE 198 20 590 A1 bekannt. Allerdings sind hierbei die Montage und die Demontage des Reifens auf der Felge sowie die damit zusammenhängende Anbringung des Dämpfungselements erschwert. Ohne aufwändige Maßnahmen kann es zu einer Beschädigung des Dämpfungselements kommen.

Weiter ist in der DE 199 01 820 A1 ein Fahrzeugluftreifen offenbart, der eine Vielzahl an Hohlraum-Resonatoren aufweist, wobei jeder Hohlraum-Resonator einen Hohlraum und einen den Hohlraum mit der inneren Reifenoberfläche verbindenden Mündungskanal aufweist, wobei der Hohlraum einen größeren Durchmesser aufweist als der Mündungskanal. Einen solchen sich zur inneren Reifenoberfläche hin verjüngenden Hohlraum-Resonator in den Reifen einzubringen ist allerdings aufwändig und schwierig. Insbesondere die zerstörungsfreie Entformung des Formmittels ist aufwändig. Auch durchbrechen die Mündungskanäle die in der Regel luftdicht ausgeführte Innenschicht des Reifens.

Aufgabe der vorliegenden Erfindung ist es, einen Fahrzeugluftreifen zur Verfügung zu stellen, der verbesserte akustische Eigenschaften aufweist und dessen Absorptionseigenschaften gezielter einstellbar sind.

Die Aufgabe wird gelöst durch einen Fahrzeugluftreifen aufweisend ein Akustikelement gemäß Anspruchs 1.

Durch die Anordnung von Hohlraum-Resonatoren innerhalb eines solchen Akustikelements an einer inneren Reifenoberfläche steht das Volumen jedes der Hohlräume über die Öffnung n der dem Reifeninnenraum zugewandten Oberfläche des Akustikelements mit dem das Akustikelement umgebenden Reifeninnenraum in Verbindung. Der Reifeninnenraum ist das Volumen das axial innerhalb des Reifens angeordnet ist. Hierdurch kann das vom Hohlraum-Resonator eingeschlossene Volumen durch Schall im Reifeninnenraum insbesondere bei seiner Eigenfrequenz zu Schwingungen angeregt werden und somit als Schallabsorber wirken. Über die Geometrie eines Hohlraum-Resonators kann seine Eigenfrequenz gezielt eingestellt werden. Bedeutend ist weiter, dass über die Einstellung der Vielzahl, d.h. mindestens 5 Stück, an Hohlraum-Resonatoren das Absorptionsspektrum des Akustikelements gezielt beeinflussbar ist. Besonders bedeutend ist hierbei, dass die Absorption gezielt auf ein Frequenzspektrum oder auch einzelne Resonanzfrequenzen eines Reifens eingestellt werden kann. Eine besonders effiziente Geräuschminderung kann erfolgen, wenn für die Frequenzabstimmung des Hohlraum-Resonators oder der Hohlraum-Resonatoren die Resonanzfrequenzen berücksichtigt werden, die sich im Betrieb des Reifens inklusive aller Einbauten, insbesondere inklusive des oder der Akustikelemente, einstellt. Des Weiteren kann die Lufttemperatur im Reifeninnenraum und der durch die Drehgeschwindigkeit erzeugte Doppler-Effekt berücksichtigt werden. Bedeutend ist auch, dass das Wirkprinzip der Hohlraum-Resonatoren unabhängig von der Materialgestaltung des Akustikelements ist, wodurch das Material hinsichtlich Funktion und Kosten optimiert werden kann.

Somit ist ein Fahrzeugluftreifen zur Verfügung gestellt, der verbesserte akustische Eigenschaften aufweist und dessen Absorptionseigenschaften gezielter einstellbar sind.

Vorteile wie das einfache Anbringen eines solchen Akustikelements an der Innenfläche eines Reifens, die Nachrüstbarkeit eines jeden Reifens sowie die einfache Montage und Demontage eines Reifens aufweisend ein solches Akustikelements auf eine Felge bleiben erhalten.

Ein erstes Ausführungsbeispiel zeichnet sich dadurch aus, dass der Öffnungsbereich zumindest eines Hohlraum-Resonators, bevorzugt die Öffnungsbereiche zumindest 40 % der Hohlraum-Resonatoren, besonders bevorzugt die Öffnungsbereiche mindestens 80 % der Hohlraum-Resonatoren, einen Mündungskanal aufweist, über welchen der Hohlraum des Hohlraum-Resonators mit der Öffnung des Hohlraum-Resonators in Verbindung steht. Es können auch die Öffnungsbereiche aller Hohlraum-Resonatoren des Akustikelements einen solchen Mündungskanal aufweisen. Die Dämpfungseigenschaften eines solchen Hohlraum-Resonators sind besonders effizient und können sehr gezielt eingestellt werden. Die Wirkungsweise ist durch ein Feder-Masse System veranschaulichbar: Dem Volumen innerhalb des Mündungskanal kann eine Masse und dem Volumen des Hohlraums kann eine Federkonstante zugeordnet werden. Durch Vibrationen der Luft im Reifeninnenraum kann dieses Feder-Masse System angeregt werden und somit den Schalldruck im Reifeninnenraum verringert werden. Eine besonders starke Geräuschreduktion ergibt sich hierbei bei der Eigenfrequenz des Hohlraum-Resonators.

Die Resonanzfrequenz der Hohlraum-Resonatoren können über die geometrischen Eigenschaften hervorragend eingestellt und an die Anforderungen des jeweiligen Reifens bzw. Einsatzes angepasst werden. Als vorteilhaft hat es sich dabei herausgestellt, wenn eine Länge L des Mündungskanals 0,01 mm bis 20 mm, bevorzugt 1 mm bis 10 mm, beträgt und / oder wenn eine Fläche F der Öffnung 1% bis 1000 % der quadrierten Länge L des jeweiligen Mündungskanals beträgt und / oder wenn ein Volumen V des Hohlraums 10 bis 10¹⁰ mal größer ist als ein Volumen des Mündungskanals.

Die Breite des Absorptionsspektrums lässt sich über die Verteilung der Resonanzfrequenzen der einzelnen Hohlraum-Resonatoren einstellen. Vorteilhaft ist es dabei, wenn sich zumindest zwei oder mehr Hohlraum-Resonatoren in der Geometrie ihrer Öffnung und / oder in der Geometrie ihres Mündungskanals und / oder in der Geometrie ihres Hohlraums unterscheiden. Die Geometrie umfasst dabei jeweils die Form, die Fläche und/oder das Volumen. Die Öffnung ist insbesondere kreisförmig, ellipsoid oder polygonal. Der Mündungskanal entspricht insbesondere einem gerade oder einem schiefen Zylinder oder einer gebogene Form oder einer sich erweiternden Form oder einer sich verjüngenden Form.. Die Grundfläche kann sich dabei an der Grundfläche der Öffnung orientieren. Die geometrische Form eines Hohlraums, kann sich in radialer Richtung oder entgegen der radialen Richtung des Fahrzeugluftreifens verjüngen oder konstant bleiben. Es kann sich beispielsweise um einen Quader, eine Pyramide, einen Pyramidenstumpf, einen umgedrehten Pyramidenstumpf, ein Parallelepiped oder einen allgemeinen Zylinder handeln. Es kann sich auch um eine senkrechte oder eine schiefe dreidimensionale Form handeln. Auch Kombinationen der genannten Formen sind möglich.

Vorteilhaft ist es auch, wenn ein dem Reifeninnenraum zugewandter Oberflächenbereich des Akustikelements zu 10 % bis 90 %, bevorzugt zu 70 % bis 80 %, durch die Öffnungen gebildet ist. Hierdurch ist eine besonders effiziente Geräuschabsorption gegeben.

Als zweckmäßig hat es sich auch herausgestellt, wenn die Öffnungen regelmäßig und/oder unregelmäßig angeordnet sind.

Ein weiteres Ausführungsbeispiel ist dadurch gegeben, dass die Hohlräume von zwei oder mehr der Hohlraum-Resonatoren voneinander beabstandet angeordnet oder miteinander verbunden sind. Zwei voneinander beabstandete Hohlräume beeinflussen sich gegenseitig nicht oder kaum. Hierbei kann es sich um Helmholtz-Resonatoren handeln. Gegebenenfalls zwischen den Hohlräumen angeordnetes Material kann auch eine stützende Funktion aufweisen. Miteinander verbundene Hohlräume weisen in der Regel ein breiteres Absorptionsspektrum auf als voneinander beabstandete und nicht verbundene Hohlräume. Es kann sich hierbei auch um einen Großhohlraum handeln, der mehrere Öffnungsbereiche aufweist und somit mit mehreren Öffnungen verbunden ist. Um einzelne Hohlräume des Großhohlraums voneinander abzugrenzen, kann beim Fehlen einer Abgrenzung als Grenzfläche jeweils die Fläche angenommen werden, welche von benachbarten Öffnungen gleichen Abstand aufweist. Die Öffnungen sind in der Regel voneinander beabstandet angeordnet. Hierbei kann es sich um einen Lochplatten-Resonator handeln.

Erfindungsgemäß weist das Akustikelement eine Schicht aufweisend zumindest eine Durchgangsöffnung aufweist, wobei die zumindest eine Durchgangsöffnung jeweils den Öffnungsbereich eines Hohlraum-Resonators ganz oder teilweise beinhaltet. Die Durchgangsöffnung kann dabei den Mündungskanal und/oder die Öffnung ganz oder teilweise beinhalten. Sie kann auch den Mündungskanal und/oder die Öffnung begrenzen. Die Schicht kann weiter den Hohlraum des Hohlraum-Resonators begrenzen. Die Schicht kann, muss aber nicht, die dem Reifeninnenraum zugewandte Oberfläche des Akustikelements mitbilden oder bilden.

Erfindungsgemäß zeichnet sich die Schicht des Akustikelements dadurch aus, dass diese für eine auf die Schicht treffende Schallwelle einen Schall-Reflexionsgrad von mindestens 0,80, bevorzugt von mindestens 0,95, besonders bevorzugt von mindestens 0,99, aufweist, gemessen bei einer Referenzfrequenz f₀ = 250 Hz. Eine solche Schicht weist eine hohe Reflektivität für Schallwellen, insbesondere für Schallwellen der Referenzfrequenz f₀ auf. Hierdurch wird das akustisch aktive Volumen des Reifeninnenraums in mehrere akustisch aktive Teil-Volumina unterteilt und eine gleichmäßigere Verteilung des Schalldruckpegels auf die Schallfrequenzen sowie reduzierte Schalldruckpegelspitzen erreicht. Die einzelnen Teil-Volumina können sich dabei überschneiden oder voneinander abgegrenzt sein. Der Schall-Reflexionsgrad kann gemessen werden für eine senkrecht auf die Schicht vom Medium Luft bei Normalbedingungen, d.h. bei einem Luftdruck von 1013,25 hPa und einer Temperatur von 293,15 Kelvin, treffende Schallwelle. Der Schall-Reflexionsgrad kann gemessen werden gemäß DIN EN ISO 10534-2. Die Messung erfolgt dabei an der Schicht selbst, d.h. an der Schicht ohne das restliche Akustikelement. Außerdem bleiben die akustischen Eigenschaften des restlichen Akustikelements hierbei ganz oder weitgehend unberücksichtigt.

Ein Ausführungsbeispiel eines Akustikelements aufweisend eine solche Schicht zeichnet sich dadurch aus, dass die Schicht eine Schallkennimpedanz von 0,8·10⁶ Ns/m³ bis 18·10⁶ Ns/m³ aufweist. Die Schallkennimpedanz ist ein Maß für den Wellenwiderstand, den ein Medium einem auf das Medium einwirkenden Schall entgegensetzt. Die Schallkennimpedanz Z ist dabei definiert als Z = (ρ·G)^{1/2}. ρ ist die Dichte bei Normalbedingungen, G ist das Schubmodul. Das Schubmodul kann gemessen sein gemäß DIN ISO 1827. Bei einem solchen Akustikelement ist bei einem Auftreffen einer Schallwelle auf die Schicht die Position der Schicht durch den Schalldruck veränderbar, wodurch Schallenergie absorbiert werden kann.

Die Schicht kann ausgewählt sein aus einer Gruppe aufweisend eine Kunststofffolie und/oder eine Metallfolie, bevorzugt eine Aluminiumfolie, und/oder eine gewebeverstärkte Membran und/oder eine Schicht aufweisend Naturmaterialien und/oder eine Schicht aufweisend Kohlefasern und/oder eine Schicht aufweisend Aramid und/oder eine ausgehärtete Beschichtung und/oder ein Lack und/oder eine Schicht aus Gummi, bevorzugt eine Schicht aus Moosgummi, und/oder eine Beschichtung der Oberfläche eines Körpers und/oder eine unbehandelte Außenfläche eines Körpers. Der Körper kann insbesondere poröses Material sein. Eine Schicht ausgewählt aus der genannten Gruppe weist hervorragende Reflexionseigenschaften auf.

Die Schicht kann als Folie ausgeführt sein. Die Schicht kann mittels eines Haftmittels oder eines Klebemittels mit einem weiteren Bauteil des Akustikelements verbunden sein. Die Schicht kann Naturmaterialien wie Kork oder ein Harz, bevorzugt ein Harz auf Epoxidharzbasis, oder Kohlefasern oder Aramid aufweisen.

Die Schicht kann die Oberfläche des weiteren Bauteils bilden oder mitbilden. Die Schicht kann auch eine unbehandelte Außenfläche des weiteren Bauteils, bevorzugt eine unbehandelte Außenfläche eines porösen Materials, sein. Die Schicht kann die Verhautung eines Schaumstoffs, welche beim Schäumen entsteht, sein. Hierdurch ist ein effizientes Akustikelement mit einfachem Aufbau geschaffen. Die Beschichtung kann flüssig auf das weitere Bauteil aufgetragen und dann ausgehärtet sein. Die unbehandelte Außenfläche kann die unbehandelte Außenfläche eines porösen Materials nach dem Produktionsprozess des porösen Materials sein. Es handelt sich somit nicht um eine Schnittfläche. Es handelt sich beispielsweise um die natürliche Oberfläche eines Schaumstoffs.

Vorteilhaft ist es, wenn die Schicht eine Schichtdicke von 0,01 mm bis 20 mm aufweist. Sowohl Schichten mit einer geringen Schichtdicke von 0,01 mm bis 5 mm als auch Schichten mit einer mittleren Schichtdicke zwischen 5 mm und 12 mm als auch Schichten mit einer größeren Schichtdicke von 12 mm bis 20 mm haben sich als geeignet und vorteilhaft herausgestellt.

Erfindungsgemäß weist das Akustikelement zumindest ein Dämpfungselement, welches aus einem porösen Material, bevorzugt aus einem Schaumstoff, ausgebildet und zur Minderung von Geräuschen geeignet ist, auf. Hierdurch ermöglicht das Akustikelement eine weitere Minderung des Schalls. Dies kann durch Absorption von Schall durch das poröse Material des zumindest einen Dämpfungselements erfolgen. Durch gezielte Kombination von porösem Material und Hohlraum-Resonatoren ist eine noch effizientere Geräuschreduktion bei geringem Materialeinsatz möglich.

Ein Akustikelement gemäß der Erfindung zeichnet sich dadurch aus, dass das erste Dämpfungselement zumindest einen Hohlraum-Resonator im Bereich seines Hohlraums und / oder seines Öffnungsbereichs ganz oder teilweise begrenzt. Bevorzugt handelt es sich dabei um mindestens 10%, besonders bevorzugt um mindestens 80 % oder um 100 %, der Hohlraum-Resonatoren. Das erste Dämpfungselement kann dabei den Mündungskanal und/oder die Öffnung des zumindest einen Hohlraum-Resonators ganz oder teilweise begrenzen. Das erste Dämpfungselement kann die Oberfläche des Akustikelements mitbilden. Das erste Dämpfungselement kann zwischen voneinander beabstandet angeordneten Hohlraum-Resonatoren angeordnet sein. Das erste Dämpfungselement kann auch eine Ansammlung von miteinander verbundenen Hohlräumen ganz oder teilweise begrenzen. Das erste Dämpfungselement kann sowohl als Stütze des Akustikelements als auch als Mittel zur weiteren Geräuschreduktion dienen. Das poröse Material kann eine den zumindest einen Hohlraum-Resonator zumindest teilweise begrenzende Oberflächenbeschichtung aufweisen. Das erste Dämpfungselement kann eine Durchgangsöffnung aufweisen, welche den Hohlraum und/oder den Hohlraum-Resonator beinhaltet. Der Hohlraum kann damit von dem ersten Dämpfungselement und einer an die Durchgangsöffnung angrenzendes Reifenbauteil, insbesondere von der inneren Reifenoberfläche und/oder einem auf diese innere Reifenoberfläche angebrachtes Mittel zur Befestigung des Akustikelements und der inneren Reifenoberfläche, begrenzt sein. Zweckmäßig kann es aber auch sein, wenn ein oder mehrere Hohlraum-Resonatoren von einem zum porösen Material verschiedenen Material begrenzt sind.

Der Hohlraum und/oder der Öffnungsbereich der Hohlraum-Resonatoren kann mit Luft gefüllt sein.

Vorteilhaft kann es aber auch sein, wenn das Akustikelement ein zweites Dämpfungselement des zumindest einen Dämpfungselements aufweist und wenn das Dämpfungselement den Hohlraum und / oder den Öffnungsbereich zumindest eines Hohlraum-Resonators zu 40 Vol.-% bis 100 Vol.-% ausfüllt. Solche sogenannten "bedämpften Resonatoren" erlauben eine Verstärkung der Absorption in einem etwas breiteren Frequenzbereich, wobei die Absorption durch das eingebrachte Material des zweiten Dämpfungselements erhöht ist.

Besonders vorteilhaft ist es, wenn das Akustikelement ein zweites Dämpfungselement aufweist und wenn das zweite Dämpfungselement zwischen der Schicht und der an das Akustikelement angrenzenden inneren Reifenoberfläche angeordnet ist. Hierdurch kann ein besonders einfaches aber sehr effizientes Akustikelement bereitgestellt werden, welches ähnlich wie ein bedämpfter Lochplatten-Resonator aufgebaut ist. Bevorzugt weist die Schicht zumindest eine zur inneren Reifenoberfläche beabstandet angeordnete Kante auf. Eine Kante der Schicht ist ein Ende der Schicht, welches die Schicht in ihrer flächigen Erstreckung begrenzt.

Zweckmäßig ist es weiter, wenn das Akustikelement, insbesondere im Bereich eines Dämpfungselements, mittels eines Haftmittels fest mit der Reifenoberfläche verbunden ist.

Bei dem porösen Material des ersten Dämpfungselements und/oder des zweiten Dämpfungselements kann es sich um Standard ContiSilent®-Schaum handeln und/oder einen Schaumstoff und/oder beispielsweise Polyurethan oder Polyester mit einer Dichte von 20 kg/m³ bis 85 kg/m³ und einer Härte von 3,5 kilo-pascal bis 10 kilo-pascal. Weitere mögliche poröse Materialien weisen eine Mischung aus Polyurethan und/oder Polyester und/oder Polyether, oder Polyurethanschäume auf einer Polyetherbasis oder einer Polyesterbasis auf, und/oder sie weisen eine beliebige, schallabsorbierende Materialienmischung, beispielsweise Glas- oder Steinwolle, Schlingenware oder Hochflor oder Vliesmaterialien oder Kork auf. Weitere mögliche poröse Materialien, die sich für die Nutzung als Dämpfungselement eignen, sind beispielsweise ein Melaminharzschaum oder ein Bauschaum. Ferner weist das Material des Dämpfungselementes insbesondere eine Dichte von beispielsweise bis zu 100 kg/m³ und/oder eine Stauchhärte von beispielswiese 1,5 kilo-pascal auf. Es kann sich bei dem porösen Material um einen offenzelligen Schaumstoff oder um einen gemischtzelligen Schaumstoff oder um einen geschlossenzelligen Schaumstoff handeln. Im letztgenannten Fall sind die Stützeigenschaften des Schaums wichtiger als dessen Absorption.

Bei dem Haftmittel kann es sich um ein Dichtmittel und / oder ein Klebemittel handeln. Bei Anbringung eines Dämpfungselements an der Reifenoberfläche handelt es sich bevorzugt um ein Dichtmittel, besonders bevorzugt um ein selbsttätig abdichtendes Dichtmittel.

Bei dem Dichtmittel handelt es sich insbesondere um ein Polyurethan-Gel oder um eine Butylkautschukbasiertes Dichtmittel. Bevorzugt handelt es sich um ein Butylkautschukbasiertes Dichtmittel in Kombination mit einem Klebemittel. Bei dem Klebemittel kann es sich um ein Klebeband und/oder einen silikonbasierten Kleber und/oder einen Zwei-Komponenten-Kleber und/oder einen Baukleber und/oder einen Polyurethan-Kleber und/oder einen kautschukbasierten Kleber und/oder einen Reifenreparaturkleber und/oder einen Sekundenkleber und/oder einen Kleber basierend auf Cyanacrylat und/oder basierend auf einem wasserbasierten Acryl-System mit einer Polyethylenterephthalat-Struktur und/oder basierend auf Acryl-Nitril-Butadien-Kautschuk in Verbindung mit einem in Aceton gelösten Formaldehyd-Harz und/oder basierend auf einem Silan-Polyether und/oder basierend auf einem mit Butyl-Kautschuk vernetzten Polybuten und/oder basierend auf einem Alkoxy-Silikon handeln.

Vorteilhaft ist es, wenn das Akustikelement poröses Material mit Poren mit einem mittleren Abstand P zwischen benachbarten Poren aufweist, und wenn das Volumen V zumindest eines der Hohlraum-Resonatoren mindestens 0,65 P³, bevorzugt mindestens 0,78 P³, besonders bevorzugt mindestens 0,91 P³, beträgt. Das poröses Material kann ein erstes Dämpfungselement und/oder ein zweites Dämpfungselement sein. Der mittlere Abstand zwischen benachbarten Poren ist das arithmetische Mittel der Porenabstände von nächsten Nachbarn, gemessen zwischen den Mittelpunkten der Poren. Ein geeigneter Porenabstand P kann zwischen 700 µm und 800 µm betragen.

Zweckmäßig ist es, wenn das Akustikelement in Umfangrichtung geschlossen ausgebildet ist. Hierdurch ergibt sich eine sehr einfache Ausführung mit guten Reifen-Rundlauf-Eigenschaften.

Für eine effiziente Umverteilung des Schalldruckpegels ist es vorteilhaft, wenn über den Umfang des Reifens verteilt zwei, drei oder mehrere Akustikelemente angeordnet sind. Hierdurch ist im Vergleich zu einem zusammenhängenden umlaufenden Element Material eingespart. Vorteilhaft ist es auch, wenn zwei oder mehr Akustikelemente in axialer Richtung nebeneinander angeordnet sind. Die Akustikelemente können alle gleich oder zumindest teilweise voneinander verschieden ausgebildet sein. Sie können sich beispielsweise in ihrer Größe und/oder Geometrie und/oder ihren Hohlraum-Resonatoren voneinander unterscheiden. Bei der geometrischen Form des Akustikelements kann es sich beispielsweise um einen Quader, eine Pyramide, einen Pyramidenstumpf, einen umgedrehten Pyramidenstumpf, ein Parallelepiped oder einen allgemeinen Zylinder handeln. Es kann sich auch um eine senkrechte oder eine schiefe dreidimensionale Form handeln. Auch Kombinationen der genannten Formen sind möglich.

Weiter betrifft die Erfindung ein Fahrzeugrad mit einer Felge und einem auf der Felge montierten Fahrzeugluftreifen, wobei der Fahrzeugluftreifen erfindungsgemäß ein oder mehrere Akustikelemente aufweist.

Es kann sich um ein Rad oder einen Reifen für einen Personenkraftwagen, einen Van, ein SUV, einen Light-Truck, ein Nutzfahrzeug, ein Kraftrad oder einen Bus handeln. Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen radialen Teilquerschnitt durch einen Fahrzeugluftreifen aufweisend zumindest ein Akustikelement;
Fig. 2, 3, 5 und 7 je einen Teilquerschnitt durch ein Akustikelement;
Fig. 4, 6 und 8 einen Teilquerschnitt durch ein Akustikelement gemäß der Erfindung;
Fig. 9 eine Draufsicht auf ein Akustikelement;
Fig. 10 bis Fig. 12 je einen Teilquerschnitt durch ein Akustikelement.

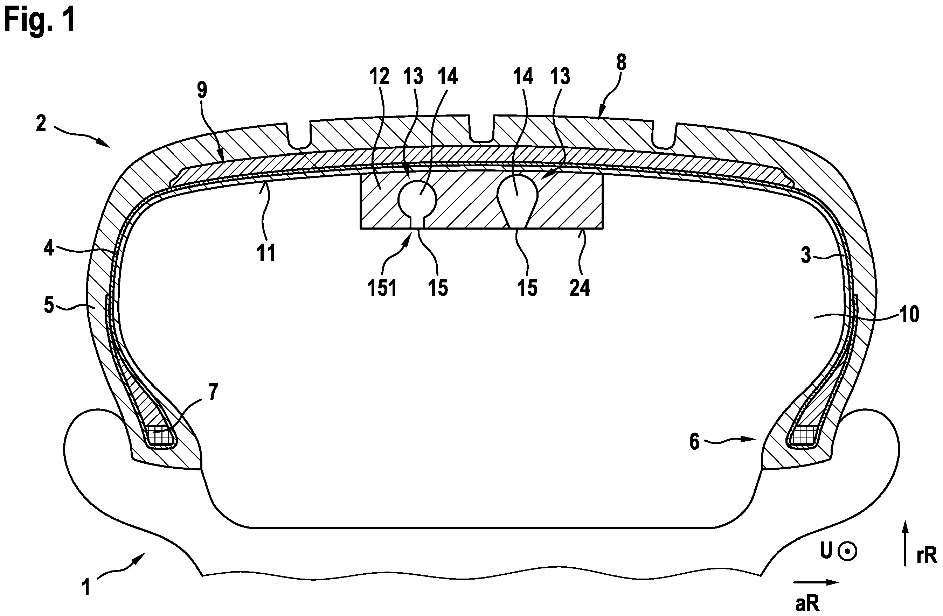

Die Figur 1 zeigt einen radialen Teilquerschnitt durch ein Fahrzeugrad mit einer Felge 1 und einem auf der Felge 1 montierten Fahrzeugluftreifen 2 in Radialbauart. Die wesentlichen Bauteile, aus welchen sich der dargestellte Fahrzeugluftreifen 2 zusammensetzt, sind eine weitgehend luftundurchlässige Innenschicht 3, eine zumindest eine Verstärkungslage aufweisende Karkasse 4, die in herkömmlicher Weise vom Zenitbereich des Fahrzeugluftreifens 2 über die Seitenwände 5 bis in die Wulstbereiche 6 reicht und dort durch Umschlingen zugfester Wulstkerne 7 verankert ist, einen radial außerhalb der Karkasse 4 befindlichen profilierten Laufstreifen 8 und einen zwischen dem Laufstreifen 8 und der Karkasse 4 angeordneten mehrlagigen Gürtelverband 9, welcher eine Gürtelbandage aufweisen kann. Es kann sich hierbei um ein Rad für einen Personenkraftwagen oder für ein Nutzfahrzeug handeln.

Der erfindungsgemäße Reifen 2 kann luftdicht auf einer Felge 1 montiert werden. Der axial innerhalb des Reifens 2 eingeschlossene Raum wird als Reifeninnenraum 10 bezeichnet, die den Reifeninnenraum begrenzende Oberfläche des Reifens 2 als innere Reifenoberfläche 11.

An einer dem Laufstreifen 8 gegenüberliegenden inneren Reifenoberfläche 11 ist ein Akustikelement 12 angeordnet, welches eine Vielzahl von Hohlraum-Resonatoren 13, d.h. mindestens 5 Hohlraum-Resonatoren 13, aufweist. Jeder Hohlraum-Resonator 13 weist einen Hohlraum 14 und einen Öffnungsbereich 151 auf, wobei der Öffnungsbereich 151 eine Öffnung 15 in einer dem Reifeninnenraum 10 zugewandten Oberfläche 24 des Akustikelements 12 beinhaltet und wobei der Hohlraum 14 mit der Öffnung 15 in Verbindung steht. Das Akustikelement 12 ist mittels eines Befestigungsmittels fest mit der inneren Oberfläche 11 des Reifens 2 verbunden.

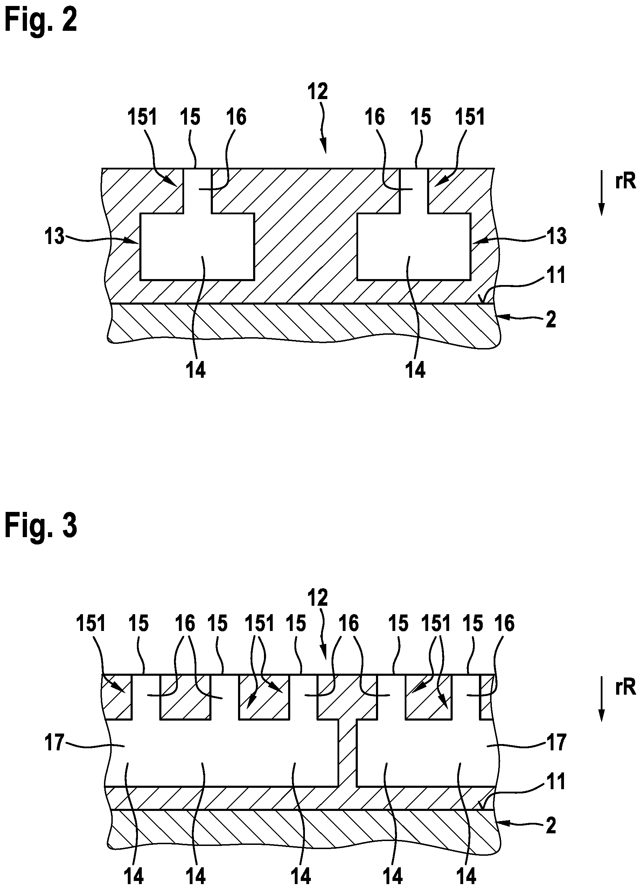

Die Figur 2 zeigt einen Teilquerschnitt durch ein anderes Akustikelement 12, welches an einer inneren Reifenoberfläche 11 angeordnet ist. Der Öffnungsbereich 151 zumindest eines Hohlraum-Resonators 13, bevorzugt die Öffnungsbereiche 151 zumindest 40 % der Hohlraum-Resonatoren 13, besonders bevorzugt die Öffnungsbereiche 151 mindestens 80 % der Hohlraum-Resonatoren 13 oder alle Hohlraum-Resonatoren 13 des Akustikelements 12, weisen einen Mündungskanal 16 auf, über welchen der Hohlraum 14 des Hohlraum-Resonators 13 mit der Öffnung 15 des Hohlraum-Resonators 13 in Verbindung steht. Die beiden gezeigten Hohlräume 14 sind dabei voneinander beabstandet angeordnet.

Die Figur 3 zeigt ein entsprechendes Akustikelement 12, wobei die Hohlräume 14 mehrerer Hohlraum-Resonatoren 13 zu einem Großhohlraum 17 verbunden sind.

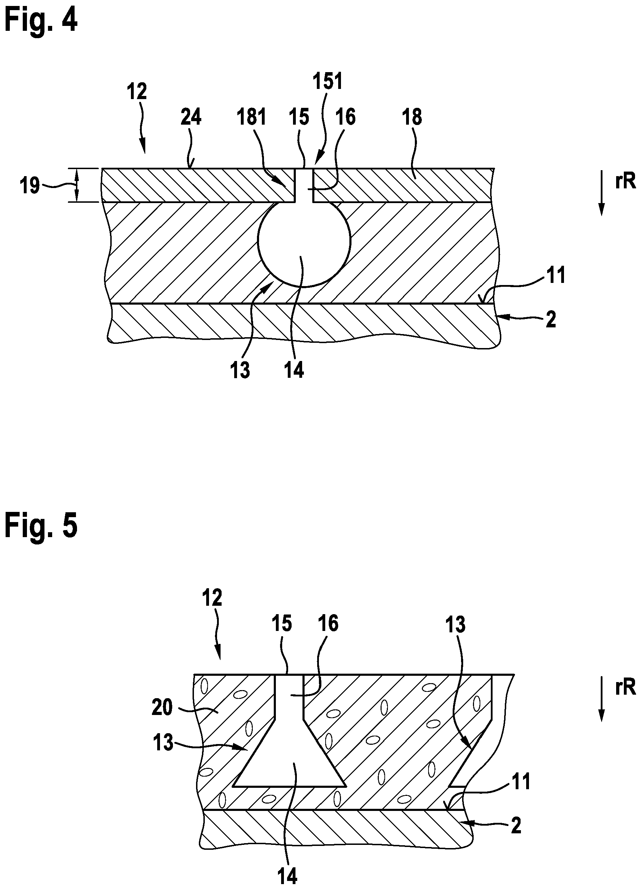

Die Figur 4 zeigt ein Akustikelement 12, welches eine Schicht 18 mit zumindest einer Durchgangsöffnung 181 aufweist. Die zumindest eine Durchgangsöffnung 181 beinhaltet jeweils den Öffnungsbereich 151 eines Hohlraum-Resonators 13 ganz oder teilweise. Im gezeigten Beispiel beinhaltet die Durchgangsöffnung 181 den Öffnungsbereich 151 mit dem Mündungskanal 16 und der Öffnung 15 ganz und begrenzt diese. Die Schicht 18 begrenzt zudem den Hohlraum 14 des Hohlraum-Resonators 13.

Die Schicht 18 kann, muss aber nicht, die dem Reifeninnenraum 10 zugewandte Oberfläche 24 des Akustikelements 12 mitbilden oder bilden. Die Schicht 18 kann für eine auf die Schicht 18 treffende Schallwelle einen Schall-Reflexionsgrad von mindestens 0,80, bevorzugt von mindestens 0,95, besonders bevorzugt von mindestens 0,99, aufweist, gemessen bei einer Referenzfrequenz f₀ = 250 Hz. Die Schicht 18 kann zusätzlich oder alternativ eine Schallkennimpedanz von 0,8·10⁶ Ns/m³ bis 18·10⁶ Ns/m³ aufweisen.

Die Schicht 18 kann ausgewählt sein aus einer Gruppe aufweisend eine Kunststofffolie und/oder eine Metallfolie, bevorzugt eine Aluminiumfolie, und/oder eine gewebeverstärkte Membran und/oder eine Schicht aufweisend Naturmaterialien und/oder eine Schicht aufweisend Kohlefasern und/oder eine Schicht aufweisend Aramid und/oder eine ausgehärtete Beschichtung und/oder ein Lack und/oder eine Schicht aus Gummi, bevorzugt eine Schicht aus Moosgummi, und/oder eine Beschichtung der Oberfläche eines Körpers und/oder eine unbehandelte Außenfläche eines Körpers. Der Körper kann insbesondere poröses Material sein. Die Schicht 18 kann Naturmaterialien wie Kork oder ein Harz, bevorzugt ein Harz auf Epoxidharzbasis, oder Kohlefasern oder Aramid aufweisen. Die Schicht 18 kann die Oberfläche des weiteren Bauteils bilden oder mitbilden. Die Schicht 18 kann auch eine unbehandelte Außenfläche des weiteren Bauteils, bevorzugt eine unbehandelte Außenfläche eines porösen Materials, sein. Die Schicht kann die Verhautung eines Schaumstoffs, welche beim Schäumen entsteht, sein.

Die Schicht kann eine Schichtdicke 19 von 0,01 mm bis 20 mm aufweisen. Sowohl Schichten mit einer geringen Schichtdicke 19 von 0,01 mm bis 5 mm als auch Schichten mit einer mittleren Schichtdicke 19 zwischen 5 mm und 12 mm als auch Schichten mit einer größeren Schichtdicke 19 von 12 mm bis 20 mm haben sich als geeignet und vorteilhaft herausgestellt.

Die Figuren 5 bis 8 zeigen je einen Teilquerschnitt durch ein Akustikelement 12 aufweisend ein Dämpfungselement 20, 23, welches aus einem porösen Material, bevorzugt aus einem Schaumstoff, ausgebildet und zur Minderung von Geräuschen geeignet ist.

Bei dem porösen Material kann es sich um Standard ContiSilent®-Schaum handeln und/oder einen Schaumstoff und/oder beispielsweise Polyurethan oder Polyester mit einer Dichte von 20 kg/m³ bis 85 kg/m³ und einer Härte von 3,5 kilo-pascal bis 10 kilo-pascal. Weitere mögliche poröse Materialien weisen eine Mischung aus Polyurethan und/oder Polyester und/oder Polyether, oder Polyurethanschäume auf einer Polyetherbasis oder einer Polyesterbasis auf, und/oder sie weisen eine beliebige, schallabsorbierende Materialienmischung, beispielsweise Glas- oder Steinwolle, Schlingenware oder Hochflor oder Vliesmaterialien oder Kork auf. Weitere mögliche poröse Materialien, die sich für die Nutzung als Dämpfungselement eignen, sind beispielsweise ein Melaminharzschaum oder ein Bauschaum. Ferner weist das Material des Dämpfungselementes insbesondere eine Dichte von beispielsweise bis zu 100 kg/m³ und/oder eine Stauchhärte von beispielswiese 1,5 kilo-pascal auf.

Das Akustikelement 12, insbesondere im Bereich eines Dämpfungselements 20, 23, ist mittels eines nicht dargestellten Haftmittels fest mit der inneren Reifenoberfläche 11 verbunden ist. Bei dem Haftmittel kann es sich um ein Dichtmittel und / oder ein Klebemittel handeln. Bei Anbringung eines Dämpfungselements 20, 23 an der Reifenoberfläche 11 handelt es sich bevorzugt um ein Dichtmittel, besonders bevorzugt um ein selbsttätig abdichtendes Dichtmittel.

Die Figur 5 zeigt ein Akustikelement 12 mit einem ersten solchen Dämpfungselement 20. Dabei ist zumindest ein Hohlraum-Resonator 13 in das Dämpfungselement 20 eingebettet. Das Dämpfungselement 20 begrenzt den Hohlraum-Resonator 13 im Bereich seines Hohlraums 14 und seines Öffnungsbereichs 151. Das erste Dämpfungselement 20 bildet die Oberfläche des Akustikelements 12 mit. Das erste Dämpfungselement 20 ist zwischen voneinander beabstandet angeordneten Hohlraum-Resonatoren 13 angeordnet. Das erste Dämpfungselement 20 kann auch eine Ansammlung von miteinander verbundenen Hohlraum-Resonatoren 13, wie in der Figur 3 gezeigt, ganz oder teilweise begrenzen. Das erste Dämpfungselement 20 kann sowohl als Stütze des Akustikelements 12 als auch als Mittel zur weiteren Geräuschreduktion dienen. Das poröse Material des ersten Dämpfungselements 20 kann eine den zumindest einen Hohlraum-Resonator 13 zumindest teilweise begrenzende Oberflächenbeschichtung aufweisen.

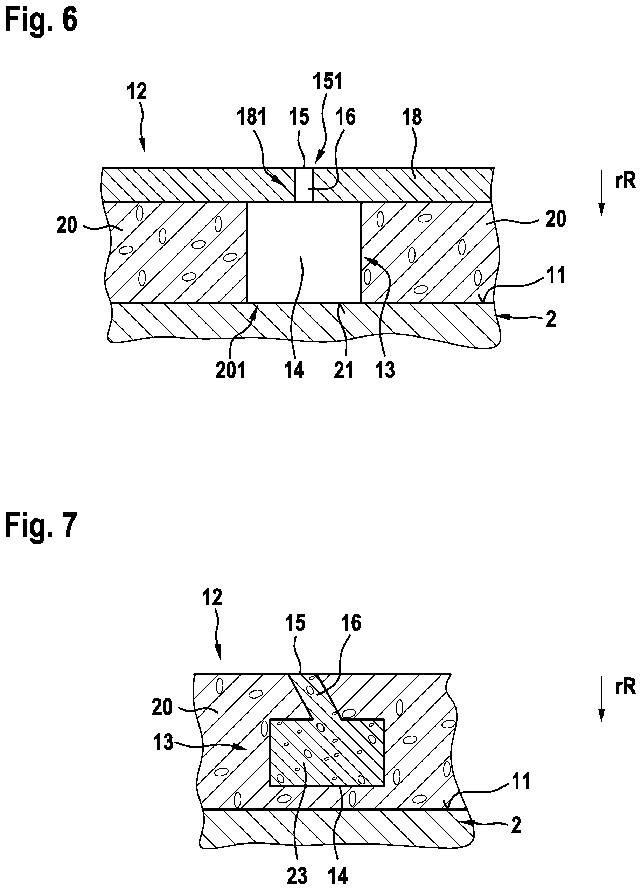

Das in der Figur 6 gezeigte Akustikelement unterscheidet sich von dem in der Figur 5 gezeigten Akustikelement 12 dadurch, dass das erste Dämpfungselement 20 eine Durchgangsöffnung 201 aufweist, welche den Hohlraum 13 beinhaltet. Der Hohlraum 13 ist von dem ersten Dämpfungselement 20 und der an die Durchgangsöffnung 201 angrenzende inneren Reifenoberfläche 11 und/oder einem auf dieser inneren Reifenoberfläche 11 angebrachten Mittel zur Befestigung des Akustikelements 12 und der inneren Reifenoberfläche 11 begrenzt. Weiter ist der Hohlraum 13 begrenzt durch die Schicht 18, deren Durchgangsöffnung 181 den Öffnungsbereich 151 beinhaltet.

Die Figur 7 grenzt sich von dem in der Figur 5 gezeigten Ausführungsbeispiel vor allem dadurch ab, dass das Akustikelement 12 ein zweites Dämpfungselement 23 des Dämpfungselements aufweist, wobei das Dämpfungselement 23 den Hohlraum 14 und/oder den Mündungskanal 16 des gezeigten Hohlraum-Resonators zu 40 Vol.-% bis 100 Vol.-% ausfüllt. Der Hohlraum-Resonator 13 kann, muss aber nicht, ganz oder teilweise von einem ersten Dämpfungselement 20 begrenzt sein. Die Dämpfungselemente 20, 23 sind aus einem unterschiedlichen porösen Material gebildet. Der Mündungskanal 16 ist ein schiefer Zylinder mit der Fläche der Öffnung 15 als Grundfläche.

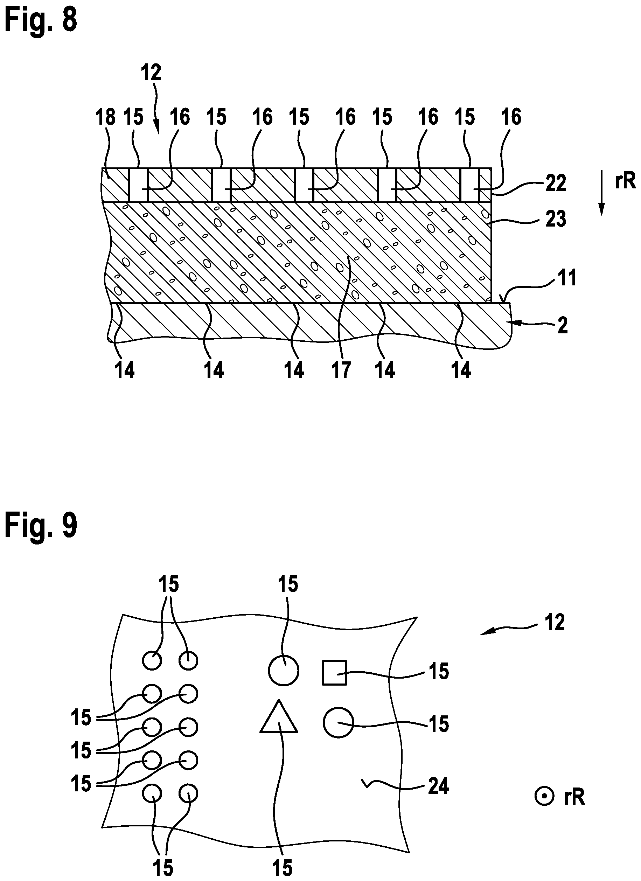

Die Figur 8 zeigt ein Akustikelement 12, welches ein zweites Dämpfungselement 23, welches aus einem porösen Material ausgebildet und zur Minderung von Geräuschen geeignet ist, wobei das zweite Dämpfungselement 23 zwischen der inneren Reifenoberfläche 11 und einer Schicht 18 angeordnet ist. Die Schicht 18 ist mit zumindest einer zur inneren Reifenoberfläche 11 beabstandet angeordneten Kante 22 ausgebildet. Das zweite Dämpfungselement 23 bildet die Hohlräume 14 bzw. den Großhohlraum 17 oder bildet die Hohlräume 14 bzw. den Großhohlraum 17 mit. Die Schicht 18 umgibt die Mündungskanäle 16 der Hohlraum-Resonatoren ganz oder teilweise.

Die in den Figuren 1 bis 8 gezeigten Hohlraum-Resonatoren können eine Länge L des Mündungskanals 0,01 mm bis 20 mm, bevorzugt 1 mm bis 10 mm, aufweisen und / oder eine Fläche F der Öffnung, die 1% bis 1000 % der quadrierten Länge L des jeweiligen Mündungskanals beträgt, aufweisen und / oder sie können ein Volumen V des Hohlraums aufweisen, das 10 bis 10¹⁰ mal größer ist als das Volumen des jeweiligen Mündungskanals. In einer vorteilhaften Variante beträgt dabei die Länge L des Mündungskanals 10 mm, die Fläche F der Öffnung 3 mm² und das Volumen (20 mm)³.

Weist das Akustikelement poröses Material mit Poren mit einem mittleren Abstand zwischen benachbarten Poren auf, dann kann das Volumen V zumindest eines der Hohlraum-Resonatoren 13 mindestens 0,65 P³, bevorzugt mindestens 0,78 P³, besonders bevorzugt mindestens 0,91 P³, betragen.

Die einzelnen Hohlraum-Resonatoren 13 eines Akustikelements 12 können sich in ihrer Geometrie ihrer Öffnung 15 und / oder in der Geometrie ihres Mündungskanals 16 und / oder in der Geometrie ihres Hohlraums 14 unterscheiden, wie in Figur 1 gezeigt. Sie können sich aber auch in einer oder mehreren der genannten Eigenschaften gleichen, wie beispielsweise in Figur 2 gezeigt.

Die Öffnung 15 ist insbesondere kreisförmig, ellipsoid oder polygonal. Der Mündungskanal 16 entspricht insbesondere einem gerade oder einem schiefen Zylinder oder einer gebogene Form oder einer sich erweiternden Form oder einer sich verjüngenden Form. Die Grundfläche kann sich dabei an der Grundfläche der Öffnung orientieren. Die geometrische Form eines Hohlraums 14, kann sich in radialer Richtung rR oder entgegen der radialen Richtung rR des Fahrzeugluftreifens verjüngen oder konstant bleiben. Es kann sich beispielsweise um einen Quader, eine Pyramide, einen Pyramidenstumpf, einen umgedrehten Pyramidenstumpf, ein Parallelepiped oder einen allgemeinen Zylinder handeln. Es kann sich auch um eine senkrechte oder eine schiefe dreidimensionale Form handeln. Auch Kombinationen der genannten Formen sind möglich.

Die Figur 9 zeigt eine Draufsicht auf ein Akustikelement 12. Das Akustikelement 12 weist einen dem Reifeninnenraum 10 zugewandten Oberflächenbereich 24 auf, der zu 10 % bis 90 %, bevorzugt zu 70 % bis 80 %, durch die Öffnungen 15 gebildet ist. Die Öffnungen 15 sind regelmäßig und/oder unregelmäßig angeordnet.

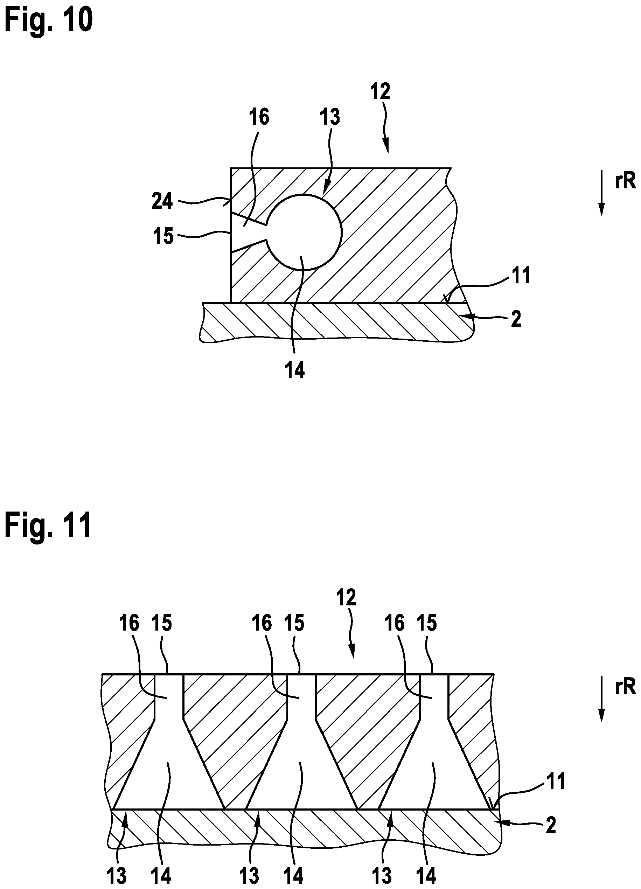

Die Figuren 10 bis 12 zeigen weitere Ausführungsbeispiele.

In der Figur 10 ist die Öffnung 15 an einer weitgehend senkrecht zur inneren Reifenoberfläche 11 verlaufenden äußeren Oberfläche 24 des Akustikelements 12 angeordnet. Der Mündungskanal 16 verjüngt sich in Richtung Hohlraum 14.

In der Figur 11 sind mehrere Hohlraum-Resonatoren 13 gezeigt, die sich über die ganze radiale Erstreckung des Akustikelements 12 erstrecken und in der Länge ihrer Mündungshälse 16 unterscheiden.

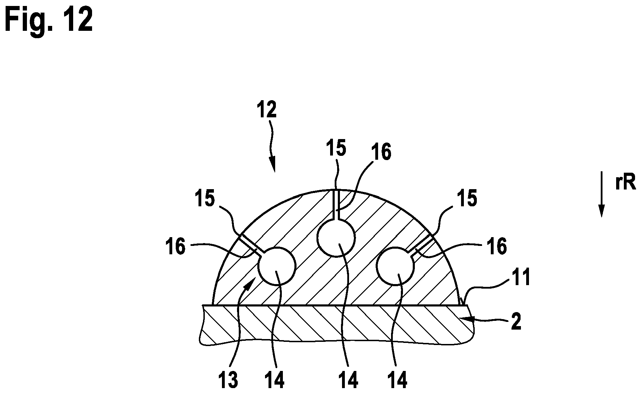

In der Figur 12 ist ein Akustikelement 12 mit weitgehend halbkreisförmigem Querschnitt gezeigt. Die Öffnungen 15 weisen in unterschiedliche Richtungen.

### Bezugszeichenliste

### (Teil der Beschreibung)

- 1: Felge
- 2: Fahrzeugluftreifen
- 3: Innenschicht
- 4: Karkasse
- 5: Seitenwand
- 6: Wulstbereich
- 7: Wulstkern
- 8: Laufstreifen
- 9: Gürtelverband
- 10: Reifeninnenraum
- 11: innere Reifenoberfläche
- 12: Akustikelement
- 13: Hohlraum-Resonator
- 14: Hohlraum
- 15: Öffnung
- 16: Mündungskanal
- 17: Großhohlraum
- 18: Schicht
- 19: Schichtdicke
- 20: erstes Dämpfungselement
- 21: an den Fahrzeugluftreifen angrenzende Oberfläche des Akustikelements
- 22: Kante
- 23: zweites Dämpfungselement
- 24: Oberfläche
- 151: Öffnungsbereich eines Hohlraum-Resonators
- 181: Durchgangsöffnung einer Schicht
- 201: Durchgangsöffnung des ersten Dämpfungselements
- rR: radiale Richtung
- aR: axiale Richtung
- U: Umfangsrichtung

## Patentansprüche

1. Fahrzeugluftreifen (2) aufweisend ein Akustikelement (12),
• wobei das Akustikelement (12) an einer einem Laufstreifen (8) gegenüberliegenden inneren Reifenoberfläche (11) in einem Reifeninnenraum (10) angeordnet ist,
• wobei das Akustikelement (12) eine Vielzahl von Hohlraum-Resonatoren (13) aufweist, wobei jeder Hohlraum-Resonator (13) einen Hohlraum (14) und einen Öffnungsbereich (151) aufweist, wobei der Öffnungsbereich (151) eine Öffnung (15) in einer dem Reifeninnenraum (10) zugewandten Oberfläche (24) des Akustikelements beinhaltet und der Hohlraum (14) mit der Öffnung (15) in Verbindung steht,
• wobei das Akustikelement (12) ein erstes Dämpfungselement (20), welches aus einem porösen Material ausgebildet und zur Minderung von Geräuschen geeignet ist, aufweist und wobei das erste Dämpfungselement (20) zumindest einen Hohlraum-Resonator (13) im Bereich seines Hohlraums (14) und / oder seines Öffnungsbereichs (151) ganz oder teilweise begrenzt,
**dadurch gekennzeichnet, dass**
• das Akustikelement (12) eine Schicht (18) aufweist, dass die Schicht (18) zumindest eine Durchgangsöffnung (181) aufweist, dass die zumindest eine Durchgangsöffnung (181) jeweils den Öffnungsbereich (151) eines Hohlraum-Resonators (13) ganz oder teilweise beinhaltet und dass die Schicht (18) für eine auf die Schicht (18) treffende Schallwelle einen Schall-Reflexionsgrad von mindestens 0,80, bevorzugt von mindestens 0,95, besonders bevorzugt von mindestens 0,99, aufweist, gemessen bei einer Referenzfrequenz f₀ = 250 Hz und
• dass das erste Dämpfungselement (20) zwischen der Schicht (18) und der an das Akustikelement (12) angrenzenden inneren Reifenoberfläche (11) angeordnet ist.

2. Fahrzeugluftreifen (2) nach Anspruch 1, **dadurch gekennzeichnet, dass** der Öffnungsbereich (151) zumindest eines Hohlraum-Resonators (13), bevorzugt die Öffnungsbereiche (151) zumindest 40 % der Hohlraum-Resonatoren (13), besonders bevorzugt die Öffnungsbereiche (151) mindestens 80 % der Hohlraum-Resonatoren (13), einen Mündungskanal (16) aufweist, über welchen der Hohlraum (14) des Hohlraum-Resonators (13) mit der Öffnung des Hohlraum-Resonators (13) in Verbindung steht.

3. Fahrzeugluftreifen (2) nach Anspruch 2, **dadurch gekennzeichnet, dass** eine Länge L des Mündungskanals 0,01 mm bis 20 mm, bevorzugt 1 mm bis 10 mm, beträgt und / oder dass eine Fläche F der Öffnung (15) 1% bis 1000 % der quadrierten Länge L des jeweiligen Mündungskanals (16) beträgt und / oder dass ein Volumen V des Hohlraums (14) 10 bis 10¹⁰ mal größer ist als ein Volumen des Mündungskanals (16).

4. Fahrzeugluftreifen (2) nach einem oder mehreren der vorhergehenden Ansprüche, **dadurch gekennzeichnet, dass** sich zumindest zwei Hohlraum-Resonatoren (13) in der Geometrie ihrer Öffnung (15) und / oder in der Geometrie ihres Mündungskanals (16) und / oder in der Geometrie ihres Hohlraums (14) unterscheiden.

5. Fahrzeugluftreifen (2) nach einem oder mehreren der vorhergehenden Ansprüche, **dadurch gekennzeichnet, dass** ein dem Reifeninnenraum (10) zugewandte Oberfläche (24) des Akustikelements (12) zu 10 % bis 90 %, bevorzugt zu 70 % bis 80 %, durch die Öffnungen (15) gebildet ist.

6. Fahrzeugluftreifen (2) nach einem oder mehreren der vorhergehenden Ansprüche, **dadurch gekennzeichnet, dass** die Hohlräume (14) von zwei oder mehr der Hohlraum-Resonatoren (13) voneinander beabstandet angeordnet oder miteinander verbunden sind.

7. Fahrzeugluftreifen (2) nach einem oder mehreren der vorhergehenden Ansprüche, **dadurch gekennzeichnet, dass** die Schicht (18) eine Schallkennimpedanz von 0,8·10⁶ Ns/m³ bis 18·10⁶ Ns/m³ aufweist.

8. Fahrzeugluftreifen (2) nach einem oder mehreren der vorhergehenden Ansprüche, **dadurch gekennzeichnet, dass** die Schicht (18) ausgewählt ist aus einer Gruppe aufweisend eine Kunststofffolie und/oder eine Metallfolie, bevorzugt eine Aluminiumfolie, und/oder eine gewebeverstärkte Membran und/oder eine Schicht aufweisend Naturmaterialien und/oder eine Schicht aufweisend Kohlefasern und/oder eine Schicht aufweisend Aramid und/oder eine ausgehärtete Beschichtung und/oder ein Lack und/oder eine Schicht aus Gummi, bevorzugt eine Schicht aus Moosgummi, und/oder eine Beschichtung der Oberfläche eines Körpers und/oder eine unbehandelte Außenfläche eines Körpers.

9. Fahrzeugluftreifen (2) nach einem oder mehreren der vorhergehenden Ansprüche, **dadurch gekennzeichnet, dass** die Schicht (18) eine Dicke (19) von 0,01 mm bis 20 mm, bevorzugt 1 mm bis 10 mm, aufweist.

10. Fahrzeugluftreifen (2) nach einem oder mehreren der vorhergehenden Ansprüche, **dadurch gekennzeichnet, dass** das Akustikelement (12) ein zweites Dämpfungselement (23), welches aus einem porösen Material ausgebildet und zur Minderung von Geräuschen geeignet ist, aufweist und dass das zweite Dämpfungselement (23) den Hohlraum (14) und / oder den Öffnungsbereich (151) zumindest eines Hohlraum-Resonators (13) zu 10 Vol.-% bis 100 Vol.-% ausfüllt.

11. Fahrzeugluftreifen (2) nach einem oder mehreren der vorhergehenden Ansprüche, **dadurch gekennzeichnet, dass** das Akustikelement (12) poröses Material mit Poren mit einem mittleren Abstand zwischen benachbarten Poren von P aufweist, und dass das Volumen V zumindest eines der Hohlraum-Resonatoren (13) mindestens 0,65 P³, bevorzugt mindestens 0,78 P³, besonders bevorzugt mindestens 0,91 P³, beträgt.

12. Fahrzeugluftreifen (2) nach einem oder mehreren der vorhergehenden Ansprüche, **dadurch gekennzeichnet, dass** das Akustikelement (12) ein zweites Dämpfungselement (23) aufweist und dass das zweite Dämpfungselement (23) zwischen der Schicht (18) und der an das Akustikelement (12) angrenzenden inneren Reifenoberfläche (11) angeordnet ist.

13. Fahrzeugrad aufweisend eine Felge (1) und einen auf der Felge (1) montierten Fahrzeugluftreifen (2) gemäß einem oder mehreren der vorhergehenden Ansprüche.

## Claims

1. Pneumatic vehicle tyre (2) having an acoustic element (12)
• wherein the acoustic element (12) is disposed in a tyre interior space (10) on an internal tyre surface (11) that is opposite a tread (8);
• wherein the acoustic element (12) has a multiplicity of cavity resonators (13), wherein each cavity resonator (12) has a cavity (14) and an opening region (151), where the opening region (151) contains an opening (15) in a surface (24) of the acoustic element that faces the tyre interior space (10), and the cavity (14) is connected to the opening (15);
• wherein the acoustic element (12) has a first damping element (20) which is configured from a porous material and is suitable for reducing noise; and wherein the first damping element (20) fully or partially delimits at least one cavity resonator (13) in the region of the cavity (14) thereof and/or the opening region (151) thereof,
**characterized in that**
• the acoustic element (12) has a layer (18), **in that** the layer (18) has at least one passage opening (181), **in that** the at least one passage opening (181) contains in each case fully or partially the opening region (151) of a cavity resonator (13), and **in that** the layer (18) for an acoustic wave impacting the layer (18) has an acoustic reflectance of at least 0.80, preferably of at least 0.95, particularly preferably of at least 0.99, measured at a reference frequency f₀ = 250 Hz, and **in that**
• the first damping element (20) is disposed between the layer (18) and the internal tyre surface (11) that is contiguous to the acoustic element (12).

2. Pneumatic vehicle tyre (2) according to Claim 1, **characterized in that** the opening region (151) of at least one cavity resonator (13), preferably the opening regions (151) of at least 40% of the cavity resonators (13), particularly preferably the opening regions (151) of at least 80% of the cavity resonators (13) have an outlet duct (16) by way of which the cavity (14) of the cavity resonator (13) is connected to the opening of the cavity resonator (13) .

3. Pneumatic vehicle tyre (2) according to Claim 2, **characterized in that** a length L of the outlet duct is 0.01 mm to 20 mm, preferably 1 mm to 10 mm, and/or **in that** an area F of the opening (15) is 1% to 1000% of the squared length L of the respective outlet duct (16), and/or **in that** a volume V of the cavity (14) is 10 to 10¹⁰ times larger than a volume of the outlet duct (16).

4. Pneumatic vehicle tyre (2) according to one or a plurality of the preceding claims, **characterized in that** at least two cavity resonators (13) differ in terms of the geometry of the opening (15) thereof and/or in terms of the geometry of the outlet duct (16) thereof and/or in terms of the geometry of the cavity (14) thereof.

5. Pneumatic vehicle tyre (2) according to one or a plurality of the preceding claims, **characterized in that** a surface (24) of the acoustic element (12) that faces the tyre interior space (10) by 10% to 90%, preferably by 70% to 80%, is formed by the openings (15).

6. Pneumatic vehicle tyre (2) according to one or a plurality of the preceding claims, **characterized in that** the cavities (14) of two or more of the cavity resonators (13) are disposed so as to be mutually spaced apart or mutually connected.

7. Pneumatical vehicle tyre (2) according to one or a plurality of the preceding claims, **characterized in that** the layer (18) has a characteristic acoustic impedance of 0.8·10⁶ Ns/m³ to 18·10⁶Ns/m³.

8. Pneumatic vehicle tyre (2) according to one or a plurality of the preceding claims, **characterized in that** the layer (18) is selected from a group comprising a plastics material film and/or a metal foil, preferably an aluminium foil, and/or a woven-fabric-reinforced membrane, and/or a layer comprising natural materials, and/or a layer comprising carbon fibres, and/or a layer comprising aramid and/or a cured coating and/or a lacquer, and/or a layer from rubber, preferably a layer from foam rubber, and/or a coating of the surface of a member, and/or a non-treated external face of a member.

9. Pneumatic vehicle tyre (2) according to one or a plurality of the preceding claims, **characterized in that** the layer (18) has a thickness (19) of 0.01 mm to 20 mm, preferably 1 mm to 10 mm.

10. Pneumatic vehicle tyre (2) according to one or a plurality of the preceding claims, **characterized in that** the acoustic element (12) has a second damping element (23) which is configured from a porous material and is suitable for reducing noise, and **in that** the second damping element (23) fills the cavity (14) and/or the opening region (151) of at least one cavity resonator (13) by 10% by volume to 100% by volume.

11. Pneumatic vehicle tyre (2) according to one or a plurality of the preceding claims, **characterized in that** the acoustic element (12) comprises porous material having pores with a mean spacing P between neighbouring pores, and **in that** the volume V of at least one of the cavity resonators (13) is at least 0.65 P³, preferably at least 0.78 P³, particularly preferably at least 0.91 P³.

12. Pneumatic vehicle tyre (2) according to one or a plurality of the preceding claims, **characterized in that** the acoustic element (12) has a second damping element (23), and **in that** the second damping element (23) is disposed between the layer (18) and the internal tyre surface (11) that is contiguous to the acoustic element (12).

13. Vehicle wheel having a rim (1) and a pneumatic vehicle tyre (2) according to one or a plurality of the preceding claims, said vehicle tyre (2) being fitted to the rim (1).

## Revendications

1. Pneu de véhicule (2) comprenant un élément acoustique (12),
- dans lequel l'élément acoustique (12) est agencé sur une surface intérieure de pneu (11), opposée à une bande de roulement (8), dans un espace intérieur de pneu (10),
- dans lequel l'élément acoustique (12) comprend une pluralité de résonateurs à cavité (13), chaque résonateur à cavité (13) comprenant une cavité (14) et une zone d'ouverture (151), la zone d'ouverture (151) contenant une ouverture (15) dans une surface (24), tournée vers l'espace intérieur de pneu (10), de l'élément acoustique et la cavité (14) étant raccordée avec l'ouverture (15),
- dans lequel l'élément acoustique (12) comprend un premier élément isolant (20), qui est formé à partir d'un matériau poreux et est approprié pour la réduction de bruits, et dans lequel le premier élément isolant (20) délimite en totalité ou en partie au moins un résonateur à cavité (13) dans la zone de sa cavité (14) et/ou de sa zone d'ouverture (151),
**caractérisé en ce que**
- l'élément acoustique (12) comprend une couche (18), **en ce que** la couche (18) comprend au moins une ouverture de passage (181), **en ce que** ladite au moins une ouverture de passage (181) contient respectivement en totalité ou en partie la zone d'ouverture (151) d'un résonateur à cavité (13), et **en ce que** la couche (18) présente pour une onde sonore incidente sur la couche (18) un degré de réflexion acoustique d'au moins 0,80, de préférence d'au moins 0,95, de manière particulièrement préférée d'au moins 0,99, mesuré à une fréquence de référence f₀ = 250 Hz, et
- **en ce que** le premier élément isolant (20) est agencé entre la couche (18) et la surface intérieure de pneu (11) adjacente à l'élément acoustique (12).

2. Pneu de véhicule (2) selon la revendication 1, **caractérisé en ce que** la zone d'ouverture (151) d'au moins un résonateur à cavité (13), de préférence la zone d'ouverture (151) d'au moins 40 % des résonateurs à cavité (13), de manière particulièrement préférée la zone d'ouverture (151) d'au moins 80 % des résonateurs à cavité (13), comprend un canal d'embouchure (16), par l'intermédiaire duquel la cavité (14) du résonateur à cavité (13) est raccordée avec l'ouverture du résonateur à cavité (13).

3. Pneu de véhicule (2) selon la revendication 2, **caractérisé en ce qu'**une longueur L du canal d'embouchure est de 0,01 mm à 20 mm, de préférence de 1 mm à 10 mm, et/ou **en ce qu'**une surface F de l'ouverture (15) est de 1 % à 1 000 % de la longueur L au carré du canal d'embouchure respectif (16), et/ou **en ce qu'**un volume V de la cavité (14) est 10 à 10¹⁰ fois plus grand qu'un volume du canal d'embouchure (16).

4. Pneu de véhicule (2) selon une ou plusieurs des revendications précédentes, **caractérisé en ce qu'**au moins deux résonateurs à cavité (13) diffèrent au niveau de la géométrie de leur ouverture (15) et/ou au niveau de la géométrie de leur canal d'embouchure (16) et/ou au niveau de la géométrie de leur cavité (14).

5. Pneu de véhicule (2) selon une ou plusieurs des revendications précédentes, **caractérisé en ce qu'**une surface (24), tournée vers la chambre intérieure de pneu (10), de l'élément acoustique (12) est formée à hauteur de 10 % à 90 %, de préférence à hauteur de 70 % à 80 %, par les ouvertures (15).

6. Pneu de véhicule (2) selon une ou plusieurs des revendications précédentes, **caractérisé en ce que** les cavités (14) de deux ou davantage des résonateurs à cavité (13) sont agencées espacées les unes des autres ou sont raccordées les unes avec les autres.

7. Pneu de véhicule (2) selon une ou plusieurs des revendications précédentes, **caractérisé en ce que** la couche (18) présente une impédance acoustique de 0,8·106 Ns/m³ à 18·10⁶ Ns/m³.

8. Pneu de véhicule (2) selon une ou plusieurs des revendications précédentes, **caractérisé en ce que** la couche (18) est choisie dans un groupe comprenant un film en matière plastique et/ou un film métallique, de préférence un film d'aluminium, et/ou une membrane renforcée par un tissu et/ou une couche comprenant des matériaux naturels et/ou une couche comprenant des fibres de carbone et/ou une couche comprenant de l'aramide et/ou un revêtement durci et/ou un vernis et/ou une couche de caoutchouc, de préférence une couche de caoutchouc cellulaire, et/ou un revêtement de la surface d'un corps et/ou une surface extérieure non traitée d'un corps.

9. Pneu de véhicule (2) selon une ou plusieurs des revendications précédentes, **caractérisé en ce que** la couche (18) présente une épaisseur (19) de 0,01 mm à 20 mm, de préférence de 1 mm à 10 mm.

10. Pneu de véhicule (2) selon une ou plusieurs des revendications précédentes, **caractérisé en ce que** l'élément acoustique (12) comprend un deuxième élément isolant (23), qui est formé à partir d'un matériau poreux et est approprié pour la réduction de bruits, et **en ce que** le deuxième élément isolant (23) remplit la cavité (14) et/ou la zone d'ouverture (151) d'au moins un résonateur à cavité (13) à hauteur de 10 % en volume à 100 % en volume.

11. Pneu de véhicule (2) selon une ou plusieurs des revendications précédentes, **caractérisé en ce que** l'élément acoustique (12) comprend un matériau poreux contenant des pores avec un écart moyen entre des pores voisins de P, et **en ce que** le volume V d'au moins un des résonateurs à cavité (13) est d'au moins 0,65 P³, de préférence d'au moins 0,78 P³, de manière particulièrement préférée d'au moins 0,91 P³.

12. Pneu de véhicule (2) selon une ou plusieurs des revendications précédentes, **caractérisé en ce que** l'élément acoustique (12) comprend un deuxième élément isolant (23) et **en ce que** le deuxième élément isolant (23) est agencé entre la couche (18) et la surface intérieure de pneu (11) adjacente à l'élément acoustique (12).

13. Roue de véhicule comprenant une jante (1) et un pneu de véhicule (2) selon une ou plusieurs des revendications précédentes monté sur la jante (1).
